# EUROPÄISCHE PATENTANMELDUNG

(11) **EP 4 328 074 A1**
(43) Veröffentlichungstag der Anmeldung: **28.02.2024**
(21) Anmeldenummer: 22191600.0
(22) Anmeldetag: 23.08.2022
(51) Int. Cl.: B60L 50/70, B60L 50/71, B60L 50/75

(54) **SCHIENENFAHRZEUG, VERFAHREN ZUM BETREIBEN EINES SCHIENENFAHRZEUGS SOWIE VERWENDUNG EINER TRAKTIONSBATTERIE**

(71) Anmelder: Stadler Rail AG, 9565 Bussnang (CH)
(72) Erfinder: Mühlbauer, Thomas, 8406 Winterthur (CH); Spillmann, Markus, 8810 Horgen (CH); Fechting, Pierre, 8004 Zürich (CH); Tscheng, Jorgen, 8046 Zürich (CH)
(74) Vertreter: Hepp Wenger Ryffel AG

(57) **Zusammenfassung**

Die Erfindung betrifft ein Schienenfahrzeug (1) umfassend eine erste Energieversorgungseinheit (5). Die erste Energieversorgungseinheit (5) umfasst mindestens zwei Brennstoffzellen (7), mindestens einen Brennstoffspeicher (8) sowie einen ersten Brennstoffzellenstromrichter (10). Der erste Brennstoffzellenstromrichter (10) weist für jede Brennstoffzelle (7) der ersten Energieversorgungseinheit (5) einen DC/DC-Wandler (12) auf. Die DC/DC-Wandler (12) können Ausgänge aufweisen, die parallel geschaltet sind. Die erste Energieversorgungseinheit (5) kann in einem Powerpack (2) angeordnet sein.

Die Erfindung betrifft ausserdem ein Verfahren zum Betreiben eines Schienenfahrzeuges (1) sowie die Verwendung einer Traktionsbatterie (21) zum Starten einer Brennstoffzelle (7).

## Beschreibung

Die folgende Erfindung betrifft ein Schienenfahrzeug umfassend eine erste Energieversorgungseinheit mit mindestens einer, bevorzugt mindestens zwei Brennstoffzellen, ein Verfahren zum Betreiben eines Schienenfahrzeugs sowie die Verwendung einer Traktionsbatterie gemäss den unabhängigen Patentansprüchen.

Schienenfahrzeuge, welche mittels einer Brennstoffzelle betrieben werden, sind bekannt. Dabei sind in den Schienenfahrzeugen Brennstoffzellen sowie Energiespeicher vorgesehen. Ausserdem umfassen die Schienenfahrzeuge oft Hilfsbetriebe. Die Brennstoffzellen, die Energiespeicher sowie die Hilfsbetriebe arbeiten dabei jeweils in unterschiedlichen Spannungsbereichen. Die Spannungsbereiche, welche für die Brennstoffzellen, die Energiespeicher bzw. die Hilfsbetriebe jeweils optimal sind, weichen häufig voneinander ab. Deshalb ist es nötig, für die einzelnen Komponenten eine unterschiedliche Spannung vorzusehen.

WO 2004/098064 offenbart einen Antriebsstrang mit einer Brennstoffzelle, welcher eine hohe Leistung übertragen kann und mit hohen Spannungen, wie sie in Schienenfahrzeugen eingesetzt werden, beaufschlagbar ist. Allerdings ist dieser Antriebsstrang unflexibel, da die Spannung in dem Antriebsstrang nicht für alle Komponenten des Antriebsstrangs geeignet ist.

EP 3 672 014 offenbart einen Antriebsstrang mit einer Brennstoffzelle. Allerdings wird in dieser Lösung die Spannung im Gleichstromzwischenkreis durch die Batterie dominiert. Dieses Spannungsniveau ist nicht geeignet für andere Komponenten des Antriebsstrangs.

Die im Stand der Technik offenbarten Antriebsstränge weisen somit den Nachteil auf, dass das Spannungsniveau der Antriebsstränge nicht befriedigend für die einzelnen Komponenten der Antriebsstränge verwendbar ist.

Es ist die Aufgabe der Erfindung, die Nachteile des Standes der Technik zu überwinden und insbesondere ein Schienenfahrzeug zu schaffen, bei dem das Spannungsniveau des Antriebsstrangs für mehrere Komponenten des Antriebsstrangs geeignet ist.

Die Aufgabe wird durch ein Schienenfahrzeug umfassend eine erste Energieversorgungseinheit mit mindestens eine, bevorzugt mindestens zwei Brennstoffzellen, ein Verfahren zum Betreiben eines Schienenfahrzeugs sowie die Verwendung einer Traktionsbatterie gemäss den unabhängigen Patentansprüchen gelöst.

Insbesondere wird die Aufgabe gelöst durch ein Schienenfahrzeug umfassend eine erste Energieversorgungseinheit. Die Energieversorgungseinheit weist mindestens eine, bevorzugt mindestens zwei Brennstoffzellen, mindestens einen Brennstoffspeicher sowie einen ersten Brennstoffzellenstromrichter auf. Der erste Brennstoffzellenstromrichter weist für jede Brennstoffzelle einen DC/DC-Wandler auf. Die DC/DC-Wandler können Ausgänge aufweisen, die parallel geschaltet sind. Die Energieversorgungseinheit kann in einem Powerpack angeordnet sein.

Es ist möglich, dass jeder Brennstoffzelle und/oder jedem DC/DC-Wandler ein elektrischer Filter zugeordnet ist.

Ein DC/DC-Wandler ist ein Gleichspannungswandler, welcher eine am Eingang zugeführte elektrische Gleichspannung in eine elektrische Gleichspannung mit einem höheren Spannungsniveau oder in eine elektrische Gleichspannung mit einem niedrigeren Gleichspannungsniveau am Ausgang umwandelt.

Dadurch, dass der erste Brennstoffzellenstromrichter für jede Brennstoffzelle einen DC/DC-Wandler umfasst, ist in der ersten Energieversorgungseinheit die gleiche Anzahl an Brennstoffzellen und den Brennstoffzellen zugeordneten DC/DC-Wandlern vorhanden. Es ist möglich, dass in der ersten Energieversorgungseinheit mehr DC/DC-Wandler als Brennstoffzellen angeordnet sind. Dies kann beispielsweise der Fall sein, wenn Hilfsbetrieben weitere DC/DC-Wandler zugeordnet sind. Entscheidend ist, dass jeder Brennstoffzelle ein DC/DC-Wandler zugeordnet ist.

Es ist auch möglich, dass die erste Energieversorgungseinheit einen DC/AC-Wandler umfasst, welcher zusätzlich zu den DC/DC-Wandlern in der Energieversorgungseinheit angeordnet ist. Der DC/AC-Wandler kann beispielsweise Hilfsbetrieben zugeordnet sein.

Brennstoffspeicher können beispielsweise Wasserstofftanks sein. Es ist auch möglich, dass die Brennstoffspeicher Methanol, Butan oder Erdgas speichern. Entscheidend ist, dass der Brennstoffspeicher Brennstoff speichert, mit dem eine Brennstoffzelle betreibbar ist.

Es ist möglich, dass der Brennstoffspeicher mehrere Brennstofftanks umfasst. Es ist möglich, dass der Brennstoffspeicher mehrere Brennstofftanks umfasst, die unabhängig voneinander befüllt oder entleert werden können. Die Brennstoffspeicher und/oder die Brennstofftanks können austauschbar sein. Die Brennstoffspeicher können durch einen Betankungsstutzen und Betankungsleitungen betankbar sein.

Ein Powerpack ist ein Schienenfahrzeugwagen, der nicht für den Aufenthalt von Passagieren bestimmt ist, sondern wesentliche Teile der Energieversorgung beinhaltet. Die erste Energieversorgungseinheit kann bevorzugt in einem Powerpack ausgebildet sein. Das Powerpack weist keine Einrichtungen für die Aufnahme von Passagieren wie beispielsweise Sitzplätze oder Toiletten auf. Allerdings kann das Powerpack so ausgebildet sein, dass sich Passagiere durch das Powerpack von einem Wagen vor dem Powerpack zu einem Wagen hinter dem Powerpack bewegen können. Das Powerpack kann einen Durchgang umfassen. Der Durchgang kann ein Mittelgang sein. Es ist möglich, dass Passagiere im Bereich des Powerpacks stehen, gehen oder sich aufhalten.

Bevorzugt ist das Powerpack autonom ausgebildet, d.h. es umfasst neben den Energieversorgungseinheiten alle zu deren Betrieb nötigen Komponenten wie Hilfsbetriebe sowie insbesondere Brennstoffzellenenergiespeicher zum Hochfahren der Brennstoffzelle und soweit nötig DC/DC und/oder DC/AC Wandler zur Versorgung der Hilfsbetriebe. So kann das Powerpack unabhängig vom übrigen Fahrzeug betrieben werden und z.B. bei Fahrzeugumbauten einfach in ein bestehendes Fahrzeug integriert werden.

Das Schienenfahrzeug kann eine zweite Energieversorgungseinheit aufweisen. Die zweite Energieversorgungseinheit weist mindestens eine, bevorzugt mindestens zwei Brennstoffzellen, mindestens einen Brennstoffspeicher sowie einen zweiten Brennstoffzellenstromrichter auf. Der zweite Brennstoffzellenstromrichter umfasst für jede Brennstoffzelle der zweiten Energieversorgungseinheit einen DC/DC-Wandler. Die DC/DC-Wandler können Ausgänge aufweisen, die parallel geschaltet sind. Die zweite Energieversorgungseinheit kann in dem Powerpack angeordnet sein.

Es ist möglich, dass das Powerpack mehrere Energieversorgungseinheiten aufweist. Wenn das Schienenfahrzeug zwei Energieversorgungseinheiten aufweist, ist das Schienenfahrzeug redundant mit Energieversorgungseinheiten ausgestattet. Somit kann das Schienenfahrzeug, selbst wenn die erste Energieversorgungseinheit oder die zweite Energieversorgungseinheit ausfällt, mit der jeweils anderen Energieversorgungseinheit mit Energie versorgt werden. So ist das Schienenfahrzeug auch noch betreibbar, wenn die erste Energieversorgungseinheit oder die zweite Energieversorgungseinheit defekt ist und ausfällt. Dadurch entsteht eine hohe Betriebssicherheit des Schienenfahrzeugs. Es ist möglich, dass die Leistung des Schienenfahrzeugs reduziert ist, wenn die erste Energieversorgungseinheit oder die zweite Energieversorgungseinheit ausfällt. Bevorzugt kann sich das Schienenfahrzeug, wenn die erste Energieversorgungseinheit oder die zweite Energieversorgungseinheit ausfällt, aus eigener Kraft fortbewegen.

Die zweite Energieversorgungseinheit kann analog zur ersten Energieversorgungseinheit ausgebildet sein. Dann weist die zweite Energieversorgungseinheit die dieselbe Anzahl an Brennstoffzellen auf wie die erste Energieversorgungseinheit. Es ist möglich, dass die zweite Energieversorgungseinheit dieselbe Anzahl an Brennstofftanks aufweist, wie die erste Energieversorgungseinheit. Es ist möglich, dass die zweite Energieversorgungseinheit einen im Wesentlichen identischen Brennstoffzellenstromrichter aufweist wie die erste Energieversorgungseinheit. Insbesondere kann die zweite Energieversorgungseinheit die gleiche Anzahl an Brennstoffzellen sowie DC/DC-Wandlern umfassen, wie die erste Energieversorgungseinheit.

Da die erste Energieversorgungseinheit und die zweite Energieversorgungseinheit pro Brennstoffzelle jeweils einen DC/DC-Wandler aufweisen, weist die erste Energieversorgungseinheit und die zweite Energieversorgungseinheit dieselbe Anzahl an Brennstoffzellen zugeordneten DC/DC-Wandlern auf, wenn sie auch dieselbe Anzahl an Brennstoffzellen aufweisen. Es ist möglich, dass die erste Energieversorgungseinheit und die zweite Energieversorgungseinheit eine unterschiedliche Anzahl an DC/DC-Wandlern aufweisen, wenn DC/DC-Wandler Hilfsbetrieben zugeordnet sind.

Es ist möglich, dass die erste Energieversorgungseinheit und die zweite Energieversorgungseinheit jeweils auf einer Schienenfahrzeugseite angeordnet sind. Beispielsweise kann die erste Energieversorgungseinheit in Fahrtrichtung links einer Längsachse des Schienenfahrzeugs angeordnet und die zweite Energieversorgungseinheit in Fahrtrichtung rechts der Längsachse angeordnet sein. Dann ergibt sich eine vorteilhafte Gewichtsverteilung.

Zwischen der ersten Energieversorgungseinheit und der zweiten Energieversorgungseinheit kann sich ein Gang befinden. Der Gang kann ein Mittelgang sein. Der Gang kann so ausgebildet sein, dass Passagiere vor dem Powerpack in einen Bereich hinter den Powerpack gelangen können.

Es ist möglich, dass die erste Energieversorgungseinheit und die zweite Energieversorgungseinheit so ausgebildet sind, dass Brennstoff von der ersten Energieversorgungseinheit zu der zweiten Energieversorgungseinheit leitbar ist, oder dass Brennstoff von der zweiten Energieversorgungseinheit zu der ersten Energieversorgungseinheit leitbar ist.

Der erste Brennstoffzellenstromrichter kann elektrisch mit einem DC-Bus verbunden sein. Der erste Brennstoffzellenstromrichter kann insbesondere elektrisch trennbar mit dem DC-Bus verbunden sein. Der zweite Brennstoffzellenstromrichter kann elektrisch mit dem DC-Bus verbunden sein, insbesondere trennbar.

Die zur Trennung erforderlichen Schalter können im DC-Bus oder den Stromrichtern selbst vorgesehen sein.

Durch eine Verbindung der Energieversorgungseinheit mit einem DC-Bus kann die elektrische Energie von den Brennstoffzellenstromrichtern vorteilhaft auf dem Schienenfahrzeug auf verschiedene Schienenfahrzeugwagen verteilt werden.

Der DC-Bus kann mit einer Spannung von 700V beaufschlagbar sein. Es ist auch möglich, dass der DC-Bus mit einer Spannung von im Wesentlichen 800 - 1500V beaufschlagbar ist. Es ist auch möglich, dass der DC-Bus durch eine Spannung von im Wesentlichen 1000V beaufschlagbar ist.

Der DC-Bus kann über mehrere Wagen des Schienenfahrzeugs verlaufen. Der DC-Bus kann auch über jeden Wagen des Schienenfahrzeugs verlaufen.

Elektrisch trennbar verbunden bedeutet, dass der DC-Bus oder die Verbindung zwischen den Brennstoffzellenstromrichtern und dem DC-Bus Trennelemente, wie beispielsweise Schalter, aufweisen. Dann kann der DC-Bus wahlweise mit elektrischem Strom von einem Brennstoffzellenstromrichter beaufschlagt oder nicht beaufschlagt werden.

Die erste Energieversorgungseinheit und die zweite Energieversorgungseinheit können in einem Powerpack angeordnet sein. Das Powerpack kann auf einem Drehgestell angeordnet sein. Das Powerpack kann auch auf zwei Drehgestellen angeordnet sein. Mindestens eines der Drehgestelle kann ein Jakobsdrehgestell sein. Es ist möglich, dass beide Drehgestelle, auf denen das Powerpack gelagert ist, Jakobsdrehgestelle sind. Das Drehgestell des Powerpacks oder die Drehgestelle des Powerpacks können nicht angetrieben sein. Das Powerpack kann auch auf zwei konventionellen Drehgestellen gelagert sein. Es ist auch möglich, dass das Powerpack auf einem konventionellen Drehgestell und auf einem Jakobsdrehgestell gelagert ist.

Durch eine Anordnung der ersten Energieversorgungseinheit und der zweiten Energieversorgungseinheit in einem Powerpack ist sichergestellt, dass im Wesentlichen keine Bauteile, die Brennstoff enthalten, auf anderen Schienenfahrzeugwagen als auf dem Powerpack angeordnet sind. Somit sind auch keine Brennstoffübergänge von den Powerpack auf einen anderen Schienenfahrzeugwagen notwendig. Brennstoffübergänge sind teuer, aufwendig zu konstruieren und sie können Defekte aufweisen. Bei Defekten kann Brennstoff, der unter hohem Druck steht und hochentzündlich ist, austreten. Energie kann von dem Powerpack zu einem anderen Schienenfahrzeugwagen mittels seiner elektrischen Leitung, beispielsweise mittels eines DC-Bus, geleitet werden. Ausserdem ist es möglich, Schienenfahrzeuge durch den Austausch des Powerpacks auf Brennstoffzellenbetrieb umzurüsten, beispielsweise indem ein Powerpack, welches mit Diesel betrieben wird, durch ein Powerpack ersetzt wird, welches mittels Brennstoffzellen betrieben wird. Schienenfahrzeugwagen, welche kein Powerpack sind, müssen dann im Wesentlichen nicht modifiziert werden.

Durch eine Anordnung des Powerpacks auf zwei Jakobsdrehgestellen, kann das Powerpack besonders kompakt und platzsparend in die Zugkomposition eingereiht werden. Dadurch, dass die Drehgestelle des Powerpacks nicht angetrieben sind, sind in den Powerpack keine Traktionskomponenten wie beispielsweise Traktionsstromrichter oder Traktionsmotoren angeordnet. Somit kann das Powerpack gewichtsparend konstruiert werden und das oft hohe Gewicht der technischen Ausrüstung kann über mehrere Wagen des Schienenfahrzeugs verteilt werden.

In dem Schienenfahrzeug kann die erste Energieversorgungseinheit und/oder die zweite Energieversorgungseinheit einen Brennstoffzellenergiespeicher umfassen.

Durch die Zuordnung eines Brennstoffzellenenergiespeichers zu der ersten und/oder der zweiten Energieversorgungseinheit kann die erste und/oder zweite Energieversorgungseinheit, wenn die Brennstoffzelle noch nicht in Betrieb ist, mittels des Brennstoffzellenergiespeichers mit Energie beaufschlagt werden. Somit ist es möglich, mit dem Brennstoffzellenergiespeicher die Brennstoffzelle zu starten.

Der Brennstoffzellenenergiespeicher kann eine Batterie sein. Es ist möglich, dass der Brennstoffzellenenergiespeicher mehrere Batterien umfasst. Es ist möglich, dass der Brennstoffzellenenergiespeicher durch eine externe Stromversorgungseinheit mit elektrischer Energie beaufschlagbar ist. Es kann beispielsweise möglich sein, den Brennstoffzellenenergiespeicher in einer Werkstatt mittels eines Steckers einer externen Stromquelle anzuschliessen. Dann kann der Brennstoffzellenenergiespeicher in der Werkstatt geladen werden. Zu einem späteren Zeitpunkt kann der Brennstoffzellenenergiespeicher die Brennstoffzellen des Schienenfahrzeugs beim Starten der Brennstoffzelle mit Energie versorgen. Dies kann über den DC-Bus erfolgen, den auch die DC/DC-Wandler der Brennstoffzellen speisen. Sind die Brennstoffzellen gestartet und produzieren die Brennstoffzellen elektrische Energie, kann der Brennstoffzellenenergiespeicher mit elektrischer Energie aus den Brennstoffzellen versorgt werden. Dann können die Brennstoffzellen nach einem zwischenzeitlichen Stillstand bei einem neuen Start mit elektrischer Energie aus dem Brennstoffzellenenergiespeicher versorgt werden. Auf diese Weise ist das Schienenfahrzeug nach einem ersten Aufladen der Brennstoffzellenenergiespeicher im Wesentlichen unabhängig von einer externen Stromquelle betreibbar. Lediglich Brennstoff für die Brennstoffzellen muss dem Schienenfahrzeug von Zeit zu Zeit hinzugefügt werden.

Der Brennstoffzellenenergiespeicher kann in einem Powerpack angeordnet sein. Es ist auch möglich, dass der Brennstoffzellenenergiespeicher in einem anderen Schienenfahrzeugwagen angeordnet ist. Es ist möglich, dass pro Brennstoffzelle ein eigener Brennstoffzellenenergiespeicher vorgesehen ist. Es ist möglich, dass für mehrere Brennstoffzellen ein Brennstoffzellenenergiespeicher vorgesehen ist. Es ist möglich, dass alle Brennstoffzellen eines Schienenfahrzeuges an einen Brennstoffzellenenergiespeicher angeschlossen sind.

Das Powerpack kann eine erste DC-Bus Verbindungsvorrichtung aufweisen. Das Powerpack kann eine zweite DC-Bus Verbindungsvorrichtung aufweisen.

Mittels der ersten DC-Bus Verbindungsvorrichtung und/oder der zweiten DC-Bus Verbindungsvorrichtung können der erste Brennstoffzellenstromrichter und/oder der zweite Brennstoffzellenstromrichter elektrisch mit dem DC-Bus verbunden sein.

So ist es möglich beide Brennstoffzellenstromrichter an einem durchgängigen, gemeinsamen DC-Bus zu betreiben oder jedem Brennstoffzellenstromrichter einen eigenen, vom zweiten getrennten Teil-DC-Bus zuzuordnen.

Das Schienenfahrzeug kann einen ersten Passagierwagen umfassen. Der erste Passagierwagen kann einen ersten Traktionsstromrichter, einen ersten Traktionsmotor und insbesondere eine erste Traktionsbatterie aufweisen. Der erste Traktionsstromrichter kann mit dem DC-Bus über eine dritte DC-Bus Verbindungsvorrichtung trennbar verbunden sein. Der erste Traktionsstromrichter kann einen DC/AC-Wandler zur Verbindung mit dem ersten Traktionsmotor umfassen. Der Brennstoffzellenenergiespeicher und die Traktionsbatterie können identisch ausgebildet sein.

Durch eine solche Anordnung sind die Traktionskomponenten wie der Traktionsmotor, der Traktionsstromrichter und die Traktionsbatterie auf dem ersten Passagierwagen angeordnet, während die Energieversorgungskomponenten auf dem Powerpack angeordnet sind. Dadurch ergibt sich eine positive Gewichtsverteilung und damit eine vorteilhafte Fahrdynamik.

Ein Passagierwagen ist ein Wagen, welcher Sitzplätze für Passagiere aufweist.

Der erste Passagierwagen kann ein Endwagen sein. Der erste Passagierwagen kann auch ein Mittelwagen sein. Es ist möglich, dass ein Fahrgestell des ersten Passagierwagens angetrieben ist. Es ist auch möglich, dass zwei Fahrgestelle des ersten Passagierwagens angetrieben sind. Der erste Passagierwagen kann ein Jakobsdrehgestell oder ein konventionelles Drehgestell umfassen. Es ist auch möglich, dass der erste Passagierwagen zwei Jakobsdrehgestelle aufweist.

Der erste Passagierwagen kann angrenzend an das Powerpack angeordnet sein. Der erste Passagierwagen kann mit einem Jakobsdrehgestell mit dem Powerpack verbunden sein. Es ist auch möglich, dass zwischen dem ersten Passagierwagen und dem Powerpack weitere Mittelwagen angeordnet sind.

Das Schienenfahrzeug kann einen zweiten Passagierwagen umfassen. Der zweite Passagierwagen umfasst mindestens einen zweiten Traktionsstromrichter und einen zweiten Traktionsmotor. Der zweite Passagierwagen kann eine zweite Traktionsbatterie umfassen. Der zweite Traktionsstromrichter kann mit dem DC-Bus über eine vierte DC-Busverbindungsvorrichtung trennbar verbunden sein. Der zweite Traktionsstromrichter kann eine DC/AC-Wandler zur Verbindung mit dem zweiten Traktionsmotor umfassen.

So ist es möglich z.B. bei Ausfall eines Traktionsstromrichters diesen vom DC-Bus zu trennen und die gesamte Leistung aller Energieversorgungseinheiten auf die verbliebenen Traktionsstromrichter zu schalten.

Der zweite Passagierwagen kann identisch zum ersten Passagierwagen ausgebildet sein. Es ist auch möglich, dass der zweite Passagierwagen anders als der erste Passagierwagen ausgebildet ist. Es ist möglich, dass der erste Passagierwagen und/oder der zweite Passagierwagen Endwagen sind und zwischen dem ersten Passagierwagen und dem zweiten Passagierwagen das Powerpack angeordnet ist. Es ist möglich, dass die zwei Passagierwagen Endwagen sind, zwischen denen sich das Powerpack befindet, wobei zwischen dem ersten Passagierwagen und dem Powerpack und/oder dem zweiten Passagierwagen und dem Powerpack noch weitere Mittelwagen angeordnet sein können. Es ist möglich, dass das Schienenfahrzeug einen angetriebenen Endwagen und einen nicht angetriebenen Endwagen umfasst.

Es ist möglich, dass der erste Traktionsstromrichter und/oder der zweite Traktionsstromrichter einen Bremswiderstand umfassen, der über einen DC/DC-Wandler mit dem DC-Bus verbunden ist.

Bevorzugt wandeln der oder die Traktionsstromrichter beim Bremsen kinetische Energie in elektrische Energie um. Diese rekuperierte Energie kann dann entweder in die Traktionsbatterien eingespeichert oder über den Bremswiderstand abgeführt werden. Dadurch kann das Schienenfahrzeug vorteilhaft abgebremst werden.

Die Aufgabe der Erfindung wird weiterhin gelöst durch ein Verfahren zum Betreiben eines Schienenfahrzeuges wie vorhergehend beschrieben. In dem Verfahren erzeugt mindestens eine, bevorzugt zwei Brennstoffzellen elektrische Energie, die jeweils über einen eigenen DC/DC-Wandler in einen DC-Bus eingespeist wird.

Durch das Einspeisen von elektrischer Energie von mindestens einer, bevorzugt mindestens zwei Brennstoffzellen über jeweils einen eigenen DC/DC-Wandler, kann ein DC-Bus mit einer bestimmten Spannung beaufschlagt werden. Dadurch ist das Schienenfahrzeug vorteilhaft betreibbar.

Es ist möglich, dass die Energie von mehr als zwei Brennstoffzellen, welche jeweils einen eigenen DC/DC-Wandler aufweisen, in einen DC-Bus eingespeist wird.

In dem Verfahren kann die mindestens eine, bevorzugt die mindestens zwei Brennstoffzellen mit einen Brennstoffzellenenergiespeicher gestartet werden.

Bei dem Verfahren wie vorhergehend beschrieben kann die mindestens eine Brennstoffzelle mit Hilfe einer Traktionsbatterie auf einem Passagierwagen über den DC-Bus gestartet werden.

In diesem Fall ist kein Brennstoffzellenenergiespeicher notwendig. Somit sind nur wenige Bauteile notwendig und das Schienenfahrzeug kann gewichtssparend ausgebildet und damit effizient betrieben werden.

Die mindestens eine Brennstoffzelle kann mit einer Traktionsbatterie von einem ersten Passagierwagen über den DC-Bus gestartet werden. Die Traktionsbatterien können auch mittels einer Traktionsbatterie von dem zweiten Passagierwagen über den DC-Bus gestartet werden. Es ist auch möglich, dass die Brennstoffzelle mit Hilfe von Traktionsbatterien von mehreren Passagierwagen gestartet wird.

Die Aufgabe der Erfindung wird weiterhin gelöst durch die Verwendung einer Traktionsbatterie in einem Passagierwagen zum Starten mindestens einer, bevorzugt mindestens zwei Brennstoffzelle in einem anderen Wagen. Der andere Wagen kann ein Powerpack sein.

Durch die Verwendung einer Traktionsbatterie in einem Passagierwagen zum Starten einer Brennstoffzelle in einem anderen Wagen ist kein Brennstoffzellenenergiespeicher notwendig. Somit kann das Schienenfahrzeug gewichtssparend konstruiert und dadurch effizient betrieben werden.

Die Erfindung wird in den folgenden Figuren näher erläutert. Hierbei zeigt:
- Figur 1:: Ein Schienenfahrzeug mit einem Powerpack und einem ersten Passagierwagen sowie einem zweiten Passagierwagen und eine schematische Darstellung einer Energieversorgungs- und Traktionsausrüstung,
- Figur 2:: einen Schaltplan eines Powerpacks mit einer ersten Energieversorgungseinheit und einer zweiten Energieversorgungseinheit, und
- Figur 3:: einen Schaltplan mit einem Powerpack und einem ersten Traktionsstromrichter sowie einem ersten Traktionsmotor.

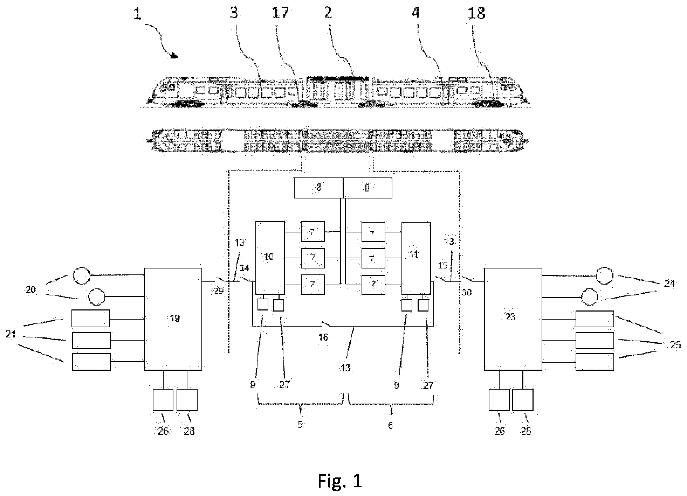

Figur 1 zeigt ein Schienenfahrzeug 1 mit einem Powerpack 2 und einem ersten Passagierwagen 3 sowie einem zweiten Passagierwagen 4 sowie eine schematische Darstellung der Energieversorgungs- und Traktionsausrüstung. Das Powerpack 2 ist mit dem ersten Passagierwagen 3 sowie dem zweiten Passagierwagen 4 jeweils über ein Jakobsdrehgestell 17 verbunden. Der erste Passagierwagen 3 sowie der zweite Passagierwagen 4 weisen neben einem Jakobsdrehgestell 17 jeweils ein konventionelles Drehgestell 18 auf. In dem Powerpack 2 ist eine erste Energieversorgungseinheit 5 sowie eine zweite Energieversorgungseinheit 6 angeordnet.

Die erste Energieversorgungseinheit 5 umfasst einen Brennstoffspeicher 8. Der Brennstoffspeicher 8 versorgt drei Brennstoffzellen 7 mit Brennstoff. Die drei Brennstoffzellen 7 sind elektrisch parallel an einen ersten Brennstoffzellenstromrichter 10 angeschlossen. Ausserdem ist ein Brennstoffzellenenergiespeicher 9 an den ersten Brennstoffzellenstromrichter 10 angeschlossen. An den ersten Brennstoffzellenstromrichter 10 sind Hilfsbetriebe 27 angeschlossen.

Die zweite Energieversorgungseinheit 6 ist analog zur ersten Energieversorgungseinheit 5 aufgebaut. Der erste Brennstoffzellenstromrichter 10 ist mit dem zweite Brennstoffzellenstromrichter 11 über einen DC-Bus 13 elektrisch verbunden. In dem DC-Bus 13 ist ein erster Schalter 16 angeordnet.

Die Brennstoffzellenstromrichter (10, 11) sind mit dem DC-Bus 13 jeweils über eine eigene DC-Bus Verbindungsvorrichtung verbunden. Der erste Brennstoffzellenstromrichter 10 ist mittels der ersten DC-Bus Verbindungsvorrichtung 14 mit dem DC-Bus 13 verbunden. Der zweite Brennstoffzellenstromrichter 11 ist mittels der zweiten DC-Bus Verbindungsvorrichtung 15 mit dem DC-Bus 13 verbunden.

Der DC-Bus weist eine dritte DC-Bus Verbindungsvorrichtung 29 auf, durch welche der erste Traktionsstromrichter 19 trennbar angeschlossen ist. Am ersten Traktionsstromrichter 19 sind erste Traktionsmotoren 20 angeschlossen. Ausserdem ist an dem ersten Traktionsstromrichter 19 eine erste Traktionsbatterie 21 angeschlossen. Ferner sind an dem ersten Traktionsstromrichter 19 ein Bremswiderstand 26 sowie Traktionshilfsbetriebe 28 angeschlossen. An den ersten Traktionsstromrichter 19 können auch Fahrgastklimageräte und andere Verbraucher angeschlossen sein. Der DC-Bus 13 führt von dem Powerpack 2 zu dem ersten Traktionsstromrichter 19 auf dem ersten Passagierwagen 3. Ausserdem führt der DC-Bus von dem Powerpack 2 zu dem zweiten Traktionsstromrichter 23 auf dem zweiten Passagierwagen 4. Der erste Traktionsstromrichter 19, der erste Traktionsmotor 20, die erste Traktionsbatterie 21, ein Bremswiderstand 26 sowie Traktionshilfsbetriebe 28 sind auf dem ersten Passagierwagen 3 angeordnet. Auf dem zweiten Passagierwagen 4 ist ein zweiter Traktionsstromrichter 23 angeordnet. An den zweiten Traktionsstromrichter 23 ist der DC-Bus 13 elektrisch trennbar mittels einer vierten DC-Bus Verbindungsvorrichtung 30 angeschlossen. An den zweiten Traktionsstromrichter 23 sind ein zweiter Traktionsmotor 24, eine zweite Traktionsbatterie 25 sowie ein Bremswiderstand 26 und Traktionshilfsbetriebe 28 abgeschlossen.

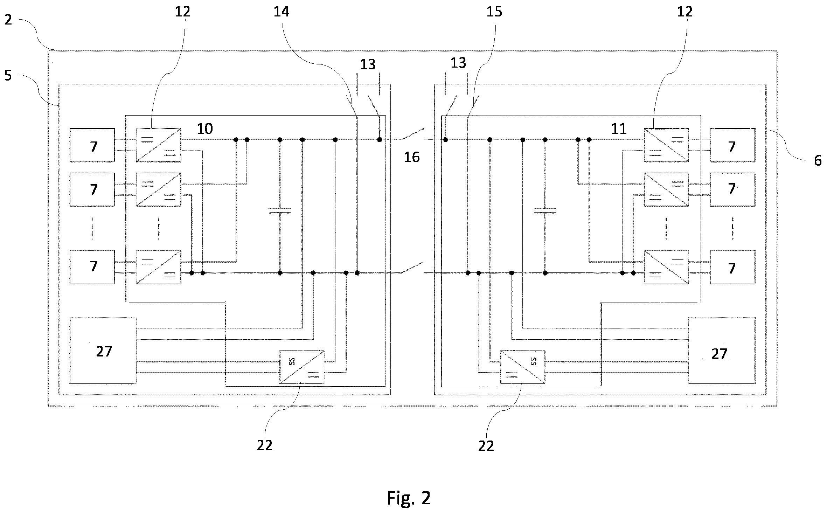

Figur 2 zeigt einen Schaltplan des Powerpacks 2 mit der ersten Energieversorgungseinheit 5 und der zweiten Energieversorgungseinheit 6. Die erste Energieversorgungseinheit 5 sowie die zweite Energieversorgungseinheit 6 sind in dem Powerpack 2 angeordnet. Die erste Energieversorgungseinheit 5 sowie die zweite Energieversorgungseinheit 6 sind elektrisch trennbar mittels eines ersten Schalters 16 verbunden. Die erste DC-Bus Verbindungsvorrichtung 14 und die zweite DC-Bus Verbindungsvorrichtung 15weisen jeweils einen Schalter auf. Die erste DC-Bus Verbindungsvorrichtung 14 und die zweite DC-Bus Verbindungsvorrichtung 15 können jeweils in eine der Energieversorgungseinheiten (5, 6), bevorzugt in den Brennstoffzellenstromrichtern (10, 11), integriert sein. Die erste Energieversorgungseinheit 5 weist einen ersten Brennstoffzellstromrichter 10 auf. Ferner weist die erste Energieversorgungseinheit 5 drei Brennstoffzellen 7 auf. Der erste Brennstoffzellenstromrichter 10 weist drei DC/DC-Wandler auf. Der erste Brennstoffzellenstromrichter 10 weist somit pro Brennstoffzelle 7 der ersten Energieversorgungseinheit 5 einen der Brennstoffzelle 7 zugeordneten DC/DC-Wandler 12 auf. Die Brennstoffzellen 7 sind elektrisch parallel an den ersten Brennstoffzellenstromrichter 10 angeschlossen. Die erste Energieversorgungseinheit 5 weist ausserdem Brennstoffzellenhilfsbetriebe 27 auf. Die Brennstoffzellenhilfsbetriebe 27 sind elektrisch an den ersten Brennstoffzellenstromrichter 10 angeschlossen. Zwischen den Brennstoffzellenhilfsbetrieben 27 und dem ersten Brennstoffzellenstromrichter 10 ist ein DC/AC-Wandler 22 geschaltet. Die Brennstoffzellenhilfsbetriebe 27 und der DC-Bus 13 sind zusätzlich direkt, also ohne weitere Bauteile, elektrisch verbunden. Soweit erforderlich können sie auch über einen (nicht dargestellten) DC/DC Wandler angeschlossen sein. Die Brennstoffzellenhilfsbetriebe können mehrere Bestandteile umfassen, die jeweils direkt oder über einen DC/DC-Wandler oder über einen DC/AC-Wandler mit dem DC-Bus 13 verbunden sind. Der zweite Brennstoffzellenstromrichter 11 ist analog zum ersten Brennstoffzellenstromrichter 10 aufgebaut und weist die gleichen Bauteile auf, welche gleich angeordnet sind. Gleiche Bezugszeichen bezeichnen die gleichen Komponenten.

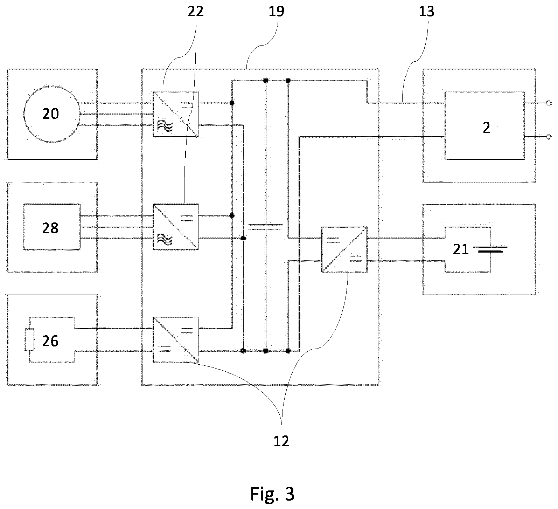

Figur 3 zeigt einen Schaltplan mit dem Powerpack 2 und einem ersten Traktionsstromrichter 19 sowie einem ersten Traktionsmotor 20. Das Powerpack 2 ist mittels eines DC-Bus 13 an die dritte DC-Bus Verbindungsvorrichtung (nicht dargestellt) des ersten Traktionsstromrichter 19 angeschlossen. Der erste Traktionsstromrichter 19 umfasst DC/DC-Wandler 12 sowie DC/AC-Wandler 22. Ein erster Traktionsmotor 20 ist an einem AC/DC-Wandler 22 des ersten Traktionsstromrichters 19 angeschlossen. Traktionshilfsbetriebe 28 sind an einem DC/AC-Wandlers 22 des ersten Traktionsstromrichters 19 angeschlossen. Ein Bremswiderstand 26 ist an einen DC/DC-Wandler 12 des ersten Traktionsstromrichters 19 angeschlossen. Erste Traktionsbatterien 21 sind an einen DC/DC-Wandler 12 des ersten Traktionsstromrichters 19 angeschlossen. Der erste Traktionsmotor 20, die ersten Traktionshilfsbetriebe 28, der Bremswiderstand 26 sowie die erste Traktionsbatterie 21 sind somit parallel an den ersten Traktionsstromrichter 19 angeschlossen. Der Traktionsstromrichter 19 weist somit Motorstromrichter, Bremsstromrichter, Hilfsbetriebeumrichter und Batteriestromrichter auf.

Elektrischer Strom ist von den Traktionsbatterie 21 durch den Traktionsstromrichter 19 zu dem Traktionsmotor 20 leitbar. Der Traktionsmotor 20 ist somit mit elektrischem Strom von den Traktionsbatterien 21 betreibbar. Elektrischer Strom ist von den Traktionsbatterien 21 durch den Traktionsstromrichter 19 zu den Brennstoffzellen (nicht dargestellt) des Powerpacks 2 leitbar. Die Brennstoffzellen (nicht dargestellt) des Powerpacks sind somit durch elektrischen Strom der Traktionsbatterien 21 startbar.

## Patentansprüche

1. Schienenfahrzeug (1) umfassend eine erste Energieversorgungseinheit (5), welche mindestens eine, bevorzugt mindestens zwei Brennstoffzellen (7), mindestens einen Brennstoffspeicher (8) sowie einen ersten Brennstoffzellenstromrichter (10) aufweist, **dadurch gekennzeichnet, dass** der erste Brennstoffzellenstromrichter (10) für jede Brennstoffzelle (7) einen DC/DC-Wandler (12) umfasst, wobei die DC/DC-Wandler (12) bevorzugt Ausgänge aufweisen, die parallel geschaltet sind, wobei die erste Energieversorgungseinheit (5) bevorzugt in einem Powerpack (2) angeordnet ist.

2. Schienenfahrzeug nach Anspruch 1, **dadurch gekennzeichnet, dass** das Schienenfahrzeug (1) eine zweite Energieversorgungseinheit (6), welche mindestens eine, bevorzugt mindestens zwei Brennstoffzellen (7), mindestens einen Brennstoffspeicher (8) sowie einen zweiten Brennstoffzellenstromrichter (11) aufweist, wobei der zweite Brennstoffzellenstromrichter (11) für jede Brennstoffzelle (7) einen DC/DC-Wandler (12) umfasst, wobei die DC/DC-Wandler (12) bevorzugt Ausgänge aufweisen, die parallel geschaltet sind, wobei die zweite Energieversorgungseinheit (6) bevorzugt in dem Powerpack (2) angeordnet ist.

3. Schienenfahrzeug (1) nach einem der vorhergehenden Ansprüche, **dadurch gekennzeichnet, dass** der erste Brennstoffzellenstromrichter (10) und insbesondere der zweite Brennstoffzellenstromrichter (11), elektrisch, insbesondere trennbar, mit einem DC-Bus (13) verbunden sind.

4. Schienenfahrzeug (1) nach einem der vorhergehenden Ansprüche, **dadurch gekennzeichnet, dass** die erste Energieversorgungseinheit (5) und die zweite Energieversorgungseinheit (6) in einem Powerpack (2) angeordnet sind und das Powerpack (2) auf mindestens einem, bevorzugt zwei, Drehgestellen (18), insbesondere Jakobsdrehgestellen (17), gelagert ist, wobei das Drehgestell (18) des Powerpacks (2) oder die Drehgestelle (18) des Powerpacks nicht angetrieben sind.

5. Schienenfahrzeug (1) nach einem der vorhergehenden Ansprüche, **dadurch gekennzeichnet, dass** die erste und/oder die zweite Energieversorgungseinheit (5, 6) einen Brennstoffzellenenergiespeicher (9) umfasst.

6. Schienenfahrzeug (1) nach einem der vorhergehenden Ansprüche, **dadurch gekennzeichnet, dass** das Powerpack (2) zumindest eine erste DC-Bus Verbindungsvorrichtung (14), bevorzugt eine zweite DC-Bus Verbindungsvorrichtung (15), aufweist.

7. Schienenfahrzeug (1) nach einem der vorhergehenden Ansprüche, **dadurch gekennzeichnet, dass** das Schienenfahrzeug (1) einen ersten Passagierwagen (3) umfasst, wobei der erste Passagierwagen (3) mindestens einen ersten Traktionsstromrichter (19), einen ersten Traktionsmotor (20) und insbesondere eine erste Traktionsbatterie (21) aufweist, wobei der Traktionsstromrichter (19) mit dem DC-Bus (13) über eine dritte DC-Bus Verbindungsvorrichtung (29) trennbar verbunden ist und der erste Traktionsstromrichter (23) einen DC/AC-Wandler (22) zur Verbindung mit dem ersten Traktionsmotor (20) umfasst.

8. Schienenfahrzeug (1) nach Anspruch 7, **dadurch gekennzeichnet, dass** das Schienenfahrzeug (1) einen zweiten Passagierwagen (4) umfasst, wobei der zweite Passagierwagen (4) mindestens einen zweiten Traktionsstromrichter (23), einen zweiten Traktionsmotor (24) und insbesondere eine zweite Traktionsbatterie (25) aufweist, wobei der zweite Traktionsstromrichter (23) mit dem DC-Bus (13) über eine vierte DC-Bus Verbindungsvorrichtung (30) trennbar verbunden ist und der zweite Traktionsstromrichter (23) einen DC/AC-Wandler (22) zur Verbindung mit dem zweiten Traktionsmotor (24) umfasst.

9. Schienenfahrzeug (1) nach einem der Ansprüche 7 oder 8, **dadurch gekennzeichnet, dass** der erste Traktionsstromrichter (19) und/oder der zweite Traktionsstromrichter (23) einen Bremswiderstand (26) umfassen, der über einen DC/DC-Wandler (12) mit dem DC-Bus (13) verbunden ist.

10. Schienenfahrzeug (1) nach einem der Ansprüche 8 oder 9, **dadurch gekennzeichnet, dass** der erste Passagierwagen (3) und/oder der zweite Passagierwagen (4) angetriebene Endwagen sind und dass das Schienenfahrzeug (1) insbesondere Mittelwagen, insbesondere nicht angetriebene Mittelwagen, aufweist.

11. Schienenfahrzeug (1) nach einem der vorhergehenden Ansprüche, **dadurch gekennzeichnet, dass** das Powerpack (2) keine Passagiersitzplätze aufweist.

12. Verfahren zum Betreiben eines Schienenfahrzeuges (1) nach einem der vorhergehenden Ansprüche, **dadurch gekennzeichnet, dass** die mindestens eine, bevorzugt mindestens zwei Brennstoffzelle (7) elektrische Energie erzeugt, die jeweils über einen eigenen DC/DC-Wandler (12) in einen DC-Bus (13) eingespeist wird.

13. Verfahren nach Anspruch 12, **dadurch gekennzeichnet, dass** die mindestens eine Brennstoffzelle (7) mit Hilfe eines Brennstoffzellenenergiespeichers (9) gestartet wird.

14. Verfahren nach Anspruch 12, **dadurch gekennzeichnet, dass** die mindestens eine Brennstoffzelle (7) mit Hilfe einer Traktionsbatterie (21) auf einem Passagierwagen (3) über den DC-Bus (13) gestartet wird.

15. Verwendung einer Traktionsbatterie (21) in einem Passagierwagen (3) zum Starten mindestens einer, bevorzugt mindestens zwei Brennstoffzelle (7) in einem anderen Wagen, insbesondere in einem Powerpack (2).
